(19) Europäisches Patentamt
European Patent Office
Office européen des brevets

(11) Publication number: **0 379 154 B1**

(12) **EUROPEAN PATENT SPECIFICATION**

(45) Date of publication of patent specification: **10.08.94**

(51) Int. Cl.5: **C08L 27/06**, //(C08L27/06, 33:12,51:04)

(21) Application number: **90100850.8**

(22) Date of filing: **16.01.90**

(54) **Vinyl chloride resin composition.**

(30) Priority: **17.01.89 JP 8291/89**

(43) Date of publication of application:
**25.07.90 Bulletin 90/30**

(45) Publication of the grant of the patent:
**10.08.94 Bulletin 94/32**

(84) Designated Contracting States:
**BE DE FR GB IT NL**

(56) References cited:
**EP-A- 0 194 384**

(73) Proprietor: **MITSUBISHI RAYON CO., LTD.**
**3-19, Kyobashi 2-chome**
**Chuo-Ku**
**Tokyo 104 (JP)**

(72) Inventor: **Ito, Hiroshi, c/o Tokyo Research Laboratories**
**Mitsubishi Rayon Co. Ltd.**
**3816, Noborito, Tama-ku**
**Kawasaki-shi Kanagawa (JP)**
Inventor: **Kawachi, Yasunori, c/o Otake Plants**
**Mitsubishi Rayon Company Ltd., 20-1, Miyuki-cho**
**Otake-shi, Hiroshima (JP)**
Inventor: **Morimoto, Masaru, c/o Otake Plants**
**Mitsubishi Rayon Company Ltd., 20-1, Miyuki-cho**
**Otake-shi, Hiroshima (JP)**

(74) Representative: **TER MEER - MÜLLER - STEINMEISTER & PARTNER**
**Mauerkircherstrasse 45**
**D-81679 München (DE)**

EP 0 379 154 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a vinyl chloride resin composition having a good transparency, heat distortion resistance and impact resistance. More particularly, the present invention relates to a vinyl chloride resin composition which is suitable for use in the manufacture of transparent molded articles having a good heat distortion resistance and impact resistance, such as a transparent bottle, a transparent vessel, and a packaging material.

A vinyl chloride resin is cheap and has excellent chemical, physical and mechanical properties, and accordingly, is manufactured in large quantities and used in various fields.

Nevertheless, the vinyl chloride resin has a problem in that the heat resistance, i.e., resistance to heat distortion, is poor. For example, the Vicat softening temperature is 75 to 80 °C as measured according to ASTM D-1525 under a load of 1 kg, and in a usual molding process, the softening temperature is further reduced by a stabilizer and a plasticizer incorporated therein. Accordingly, the problems arise of, for example, a deterioration or deformation of a blow-formed or vacuum-formed container upon high-temperature filling or high-temperature sterilization of the filled content, and an improvement of the heat resistance is required.

Several processes for improving the heat resistance of a vinyl chloride resin have been proposed, but no satisfactory results have been obtained. For example, where vinyl chloride is copolymerized with a monomer capable of yielding a homopolymer having a higher softening temperature, the copolymerizability of the monomer with vinyl chloride is poor, and no substantial improvement of the heat resistance can be obtained unless a large amount of the monomer is copolymerized. Therefore, this process is not practically worked. Some proposals have been made in connection with the process in which a polymer having a higher heat-softening temperature than that of polyvinyl chloride is incorporated in a vinyl chloride resin. As a typical example, a chlorinated vinyl chloride resin is incorporated in a vinyl chloride resin. The processability of the vinyl chloride resin is degraded, however, by the incorporation of the chlorinated vinyl chloride resin, and therefore, it is not practical to incorporate a large amount of the chlorinated vinyl chloride resin. Moreover, discoloration becomes conspicuous and appearance characteristics such as the transparency are poor. Even if other polymers having a higher heat-softening temperature are blended, most of these polymers have a poor compatibility with the vinyl chloride resin and a refractive index different from that of the vinyl chloride resin, and therefore, the obtained resin compositions are generally opaque.

Furthermore, where polymers having a higher heat-softening temperature are incorporated (Japanese Unexamined Patent Publication No. 59-98152 and Japanese Examined Patent Publication No. 46-20055), since the impact resistance is reduced, a modifier for improving the impact resistance must be added.

Where a conventional impact resistance-improving modifier for polyvinyl chloride is added to a blend of a vinyl chloride resin and other polymer having a higher heat-softening temperature (Japanese Unexamined Patent Publication No. 61-162543), the resulting resin composition becomes opaque or fluorescent and a product having a good transparency cannot be obtained.

An object of the present invention is to provide a vinyl chloride resin composition having a good transparency, heat distortion resistance, and impact resistance.

In accordance with the present invention, there is provided a vinyl chloride resin composition comprising (A) 40 to 90 parts by weight of polyvinyl chloride or a vinyl chloride copolymer comprising at least 80% by weight of units derived from vinyl chloride, (B) 5 to 50 parts by weight of a copolymer comprising 90 to 50 % by weight of units derived from methyl methacrylate, 5 to 25% by weight of units derived from an N-substituted maleimide and 5 to 25% by weight of units derived from an aromatic vinyl compound, wherein the ratio $\beta/\alpha$ of the mole number $\beta$ of the aromatic vinyl compound to the mole number $\alpha$ of the N-substituted maleimide is from 0.2 to 5 and wherein the copolymer (B) has an intrinsic viscosity of 0.1 to 0.6 dl/g as measured at 25 °C in chloroform, and (C) 5 to 30 parts by weight of a copolymer obtained by graft-polymerizing 70 to 20% by weight of at least one monomer selected from the group consisting of alkyl esters of acrylic acid, alkyl esters of methacrylic acid, aromatic vinyl compounds and vinyl cyanide compounds in the presence of 30 to 80% by weight of an elastomer containing at least 50% by weight of a conjugated diene component, said copolymer (C) having a refractive index of 1.515 to 1.535 as measured at 23 °C with sodium D rays, with the proviso that the total amounts of components (A), (B) and (C) is 100 parts by weight.

The vinyl chloride resin (A) used in the present invention is a homopolymer of vinyl chloride or a copolymer of vinyl chloride with up to 20% by weight of other copolymerizable monomer component. These homopolymers and copolymers can be used alone or in the form of a mixture of two or more thereof. As the copolymerizable monomer component, there can be mentioned ethylenically unsaturated monomers, for example, vinyl acetate, ethylene and propylene. The proportion of the monomer in the copolymer is up

to 20% by weight. If the content of the monomer exceeds 20% by weight, it is difficult to impart an intended heat distortion resistance to the vinyl chloride resin and good results cannot be obtained.

From the viewpoint of moldability, a vinyl chloride resin (A) having an average degree of polymerization of 600 to 1,100 as determined according to JIS K-6721 is preferable and is generally used.

The copolymer component (B) used in the present invention is a copolymer comprising 90 to 50% by weight of units derived from methyl methacrylate, 5 to 25% by weight of units derived from an N-substituted maleimide, and 5 to 25% by weight of units derived from an aromatic vinyl compound (the sum of these three types of units is 100% by weight). If the amount of the methyl methacrylate units exceeds 90% by weight, the improvement of the heat distortion resistance is insufficient in the final resin composition. If the amount of the methyl methacrylate units is smaller than 50% by weight, the polymerizability is lowered and many limitations are imposed on the preparation conditions, and furthermore, the final resin composition tends to become brittle.

To obtain a good synergistic effect of improving the heat resistance by the N-substituted maleimide and aromatic vinyl compound, the amounts of these components in the copolymer must be within the above-mentioned ranges, and the ratio $\beta/\alpha$ of the mole number $\beta$ of the aromatic vinyl compound to the mole number $\alpha$ of the N-substituted maleimide is adjusted within the range of from 0.2 to 5, preferably from 0.5 to 2. If this ratio $\beta/\alpha$ is lower than 0.2, many limitations are imposed on the preparation conditions and the productivity tends to be lowered, In the copolymer having a ratio $\beta/\alpha$ higher than 5, discoloration readily occurs, and a lowering of the physical properties such as the transparency is observed.

The N-substituted maleimide used in the present invention is preferably a compound represented by the following formula:

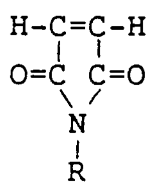

(I)

wherein R represents a hydrogen atom, an alkyl group having 1 to 15 carbon atoms, a cycloalkyl group having 5 to 8 carbon atoms, or an aryl or substituted aryl group having 6 to 20 carbon atoms. For example, there can be mentioned maleimide, N-methylmaleimide, N-ethylmaleimide, N-propylmaleimide, N-isopropylmaleimide, N-butylmaleimide, N-isobutylmaleimide, N-tert.-butylmaleimide, N-cyclohexylmaleimide, N-phenylmaleimide, N-chlorophenylmaleimide, N-methylphenylmaleimide, N-bromophenylmaleimide, N-naphthylmaleimide, N-laurylmaleimide, 2-hydroxyethylmaleimide, N-hydroxyphenylmaleimide N-methoxyphenylmaleimide, N-carboxyphenylmaleimide and N-nitrophenylmaleimide. These compounds can be used alone or in the form of a mixture of two or more thereof. Among these compounds, N-alkylmaleimides having 1 to 4 carbon atoms in the alkyl group, N-phenylmaleimide, N-substituted-phenylmaleimides, and N-cyclohexylmaleimide are preferably used.

As typical instances of the aromatic vinyl compound used in the present invention, there can be mentioned styrene, alkylstyrenes such as o-, m- and p-methylstyrenes, 1,3-dimethylstyrene, 2,4-dimethylstyrene, p-tert.-butylstyrene, $\alpha$-methylstyrene, $\alpha$-ethylstyrene, and $\alpha$-methyl-p-methylstyrene, vinylnaphthalene, and halogenated styrenes and halogenated alkylstyrenes such as o-, m- and p-chlorostyrenes, 2,4-dibromostyrene, and 2-methyl-4-chlorostyrene. From the viewpoint of the balance between the productivity and the physical properties, at least one member selected from the group consisting of styrene, vinyltoluene and $\alpha$-methylstyrene is preferably used.

If it is desired to further improve the heat resistance, $\alpha$-methylstyrene is especially used, and if it is desired to further improve the productivity, styrene and vinyltoluene are industrially advantageously used.

Another copolymerizable monomer can be added as a fourth component in an amount of 20% by weight to the copolymer (B) according to need. For example, there can be mentioned acrylic acid and alkyl acrylates.

The copolymer (B) can be prepared according to customary polymerization processes such as suspension polymerization, bulk polymerization, solution polymerization, and emulsion polymerization by using a radical polymerization initiator. More specifically, the process disclosed in Japanese Unexamined Patent Publication No. 61-171708 is preferably adopted.

Preferably, the amount of the residual monomer contained in the copolymer (B) is not larger than 2% by weight. To obtain a molded article having a good transparency by practically applicable mechanical kneading by blow forming or extrusion molding of a composition formed by incorporating the copolymer

(B) into the vinyl chloride resin, the intrinsic viscosity (as measured at 25 °C in chloroform) of the copolymer (B) is in the range of from 0.1 to 0.6 dl/g.

The copolymer (B) of the present invention has a much higher compatibility with a vinyl chloride resin than a conventional copolymer containing an aromatic vinyl compound such as styrene, and therefore, there can be provided a vinyl chloride resin composition having an excellent transparency, a reduced discoloration and a highly improved resistance to heat distortion.

The amount of the copolymer (B) incorporated is 5 to 50 parts by weight per 100 parts by weight of the sum of the components (A), (B) and (C). If the amount of the copolymer (B) is smaller than 5 parts by weight, the heat resistance is poor, and if the amount of the copolymer (B) is larger than 50 parts by weight, the flow processability and flame retardancy tend to be lowered.

The copolymer (C) used in the present invention is a copolymer which is obtained by graft-polymerizing 70 to 20% by weight of at least one member selected from the group consisting of alkyl esters of acrylic acid, alkyl esters of methacrylic acid, aromatic vinyl compounds and vinyl cyanide compounds in the presence of 30 to 80% by weight of an elastomer containing at least 50% by weight of a conjugated diene component and has a refractive index of 1.515 to 1.535 as measured at 23 °C with sodium D rays.

The elastomer is preferably a polybutadiene elastomer or a butadiene copolymer elastomer containing at least 50% by weight of butadiene units. The alkyl ester of acrylic acid referred to herein is an alkyl acrylate having an alkyl group having 1 to 8 carbon atoms, and the alkyl ester of methacrylic acid referred to herein is an alkyl methacrylate having an alkyl group having 1 to 4 carbon atoms. As the aromatic vinyl compound, there can be mentioned styrene, $\alpha$-methylstyrene, vinyl toluene, and $\alpha$-methylvinyl toluene. As the vinyl cyanide compound, there can be mentioned, for example, acrylonitrile and methacrylonitrile.

The refractive index of the copolymer (C) must be 1.515 to 1.535, and preferably 1.520 to 1.530. If the refractive index is outside this range, the fluorescence of the final resin composition becomes conspicuous, and the resin composition becomes opaque or is discolored, with the result that the transparency is poor. The copolymer (C) exerts an excellent effect of improving the impact resistance of the vinyl chloride resin without lowering the transparency thereof. The copolymer (C) is incorporated in an amount of 5 to 30 parts by weight per 100 parts by weight of the sum of the components (A), (B) and (C). If the amount of the copolymer (C) is smaller than 5 parts by weight, the impact resistance is not sufficient, and if the amount of the copolymer (C) is larger than 30 parts by weight, the heat distortion resistance and the transparency tend to be lowered.

A heat stabilizer, a light stabilizer, a lubricant, a filler, a processing aid or a plasticizer can be added to the vinyl chloride resin composition of the present invention, if necessary. Furthermore, a commercially available impact resistance or processability improver for a vinyl chloride resin can be added according to need.

The vinyl chloride resin composition having the above-mentioned structure has an excellent transparency such that the haze value of a plate having a thickness of 3 mm, which is molded from the vinyl chloride resin composition, is not larger than 25%, and furthermore, the vinyl chloride resin composition has an excellent impact resistance and heat distortion resistance. Usually, a shaped article made from the vinyl chloride resin composition has a heat distortion temperature of at least 80 °C. Therefore, the vinyl chloride resin composition is especially valuable for the production of a transparent bottle, a transparent vessel, a packaging material and a sheet material.

The present invention will now be described in detail with reference to the following examples and comparative examples. In these examples, all of "parts" are by weight.

In the examples and comparative examples, the physical properties of the resin compositions were determined by the following methods.

(1) Analysis of Composition

The composition was analyzed by the infrared spectrophotography and acid value titration.

(2) Intrinsic Viscosity

The intrinsic viscosity was measured at 25 °C in chloroform.

(3) Amount of Residual Monomer

The amount of the residual monomer was measured by the gas chromatography according to customary procedures.

(4) Appearance (Color and Transparency)

The appearance was evaluated by the naked eye observation.

(5) Total Luminous Transmittance

The total luminous transmittance was determined according to ASTM D-1003.

(6) Haze Value

The haze value was determined according to ASTM D-1003.

(7) Dynstat Impact Strength
The Dynstat impact strength was determined according to BS-1330-1946.
(8) Izod Impact Strength
The Izod impact strength was determined according to ASTM D-256.
(9) Heat Distortion Resistance
The Vicat softening temperature was measured according to ASTM D-1525 and the heat distortion temperature was measured according to ASTM D-648.
(10) Refractive Index
The refractive index was measured at 23 ° C with sodium D rays by using a Bausch-Lomb Abbe refractometer.

Example 1

Preparation of Copolymer (B)

A flask having an inner volume of 5 liters was charged with 2,700 g of deionized water, 0.3 g of a copolymer comprising methyl methacrylate and 2-sulfoethyl methacrylate as a dispersant, and 9 g of sodium sulfate, and then 1,800 g of a monomer mixture comprising 75 parts of methyl methacrylate, 15 parts of N-(cyclohexyl)maleimide, 10 parts of styrene, 0.07 part of n-octylmercaptan, 0.5 part of azobisisobutyronitrile and 0.1 part of an ultraviolet absorber was charged. In the substantially oxygen-free state, the mixture was maintained at 80 ° C for 3.5 hours while stirring at 500 rpm to effect a suspension polymerization. The reaction mixture was washed and dehydrated to obtain a copolymer (B) in the form of beads having an average diameter of 0.25 mm. The composition of the copolymer (B) was the same as the composition of the charged monomers. The intrinsic viscosity of the copolymer (B) was 0.48 dl/g and the amount of the residual monomer was 0.7%.

Preparation of Copolymer (C)

A sealed reaction vessel equipped with a stirrer was charged with 180 parts of deionized water, 100 parts of 1,3-butadiene, 3.0 parts of potassium oleate, and 0.4 part of potassium persulfate, and reaction was carried out at 60 ° C for 12 hours in the substantially oxygen-free state to obtain an elastomer latex. The polymerization conversion was 98%.

Then a reaction vessel equipped with a stirrer was charged with 55 parts (as the solids) of the above-mentioned elastomer latex, 50 parts of deionized water, 23 parts of styrene, 1.0 part of cumene hydroperoxide, 1.0 part of sodium formaldehyde-sulfoxylate and 1.0 part of potassium oleate. A reaction was carried out at 70 ° C for 3 hours, and then, 22 parts of methyl methacrylate was added to the reaction mixture, and a reaction was carried out at 70 ° C for 2 hours.

The obtained latex was coagulated, washed and dried to obtain a powdery copolymer (C). The polymerization conversion of the copolymer (C) was 99%, and the refractive index of the copolymer (C) was 1.530.

Preparation of Resin Composition

The obtained copolymers were blended according to the following recipe:

| | |
|---|---|
| Copolymer (B) | 30 parts |
| Copolymer (C) | 10 parts |
| Vinyl chloride resin (polymerization degree = 800) | 60 parts |
| Dioctyltin mercaptide | 2.5 parts |
| Butyl stearate | 0.5 part |
| Montan wax | 0.5 part |

The blend was mixed together by a Henschel mixer and molded into a sheet having a thickness of 3 mm by using an extruder having a screw diameter of 40 mm. The physical properties of the obtained sheet were evaluated. The results are shown in Table 2.

Example 2

The procedures of Example 1 were repeated in the same manner except that the copolymer (C) was prepared as described below, and the physical properties of the obtained sheet were similarly evaluated. The results are shown in Table 2. The refractive index of the copolymer (C) was 1.521.

Preparation of Copolymer (C)

A sealed reaction vessel equipped with a stirrer was charged with 180 parts of deionized water, 89 parts of 1,3-butadiene, 11 parts of styrene, 3.0 parts of potassium oleate and 0.4 part of potassium persulfate, and a reaction was carried out at 60 °C for 12 hours in the substantially oxygen-free state to obtain an elastomer.

A reaction vessel equipped with a stirrer was charged with 67 parts (as the solids) of the obtained elastomer, 50 parts of deionized water, 6 parts of styrene, 27 parts of methyl methacrylate, 1.0 part of cumene hydroperoxide, 1.0 part of sodium formaldehydesulfoxylate, and 1.0 part of potassium oleate. A reaction was carried out at 70 °C for 3 hours, and the obtained latex was coagulated, washed, and dried to obtain a powdery copolymer (C).

Example 3

The procedures of Example 1 were repeated in the same manner except that the monomer composition of the copolymer (B) was changed as shown in Table 1, and the physical properties of the obtained sheet were similarly evaluated. The results are shown in Table 2.

Example 4

The procedures of Example 1 were repeated in the same manner except that the mixing ratios of the vinyl chloride resin and the copolymer (C) were changed as shown in Table 1, and the physical properties of the obtained sheet were similarly evaluated. The results are shown in Table 2.

Example 5

The procedures of Example 1 were repeated in the same manner except that the copolymer (B) was prepared using N-phenylmaleimide instead of N-cyclohexylmaleimide and the mixing ratios of the copolymers (B) and (C) were changed as shown in Table 1, and the physical properties of the obtained sheet were similarly evaluated. The results are shown in Table 2.

Example 6

The procedures of Example 2 were repeated in the same manner except that the copolymer (B) was prepared using N-tert-butylmaleimide instead of N-cyclohexylmaleimide, and the physical properties of the obtained sheet were similarly evaluated. The results are shown in Table 2.

Comparative Example 1

The procedures of Example 1 were repeated in the same manner except that the copolymers (B) and (C) were not incorporated and the same amounts of the additives as used in Example 1 were added to 100 parts of the vinyl chloride resin (A), and the physical properties of the obtained sheet were similarly evaluated. The results are shown in Table 2.

Comparative Example 2

The procedures of Example 1 were repeated in the same manner except that the same copolymer (B) and additives as used in Example 1 were added to the vinyl chloride resin (A), and the physical properties of the obtained sheet were similarly evaluated. The results are shown in Table 2.

Comparative Example 3 and 4

The procedures of Example 1 were repeated in the same manner except that the mixing ratios of the monomers for the copolymer (C) of Example 1 were changed as shown in Table 1, and the physical properties of the obtained sheet were similarly evaluated. The results are shown in Table 2.

Comparative Example 5

The procedures of Example 2 were repeated in the same manner except that the mixing ratios of the vinyl chloride resin (A) and the copolymer (C) in Example 2 were changed as shown in Table 1, and the physical properties of the obtained sheet were similarly evaluated. The results are shown in Table 2.

From the results of the foregoing examples, it is seen that the vinyl chloride resin composition of the present invention has an excellent transparency, heat distortion resistance and impact resistance.

In contrast, as is seen from the results of the comparative examples, the vinyl chloride resin composition outside the scope of the present invention has a large haze value and a poor transparency, or a poor heat distortion resistance or impact resistance.

Example 7

The procedures of Example 1 were repeated in the same manner except that the copolymer was prepared using N-phenylmaleimide instead of N-cyclohexylmaleimide and the amount of n-octylmercaptan charged was changed to 0.2 part, and the physical properties of the obtained sheet were similarly evaluated. The results are shown in Table 2. The intrinsic viscosity of the copolymer (B) was 0.36 dl/g.

Example 8

The procedures of Example 1 were repeated in the same manner except that the copolymer (B) was prepared using N-(2-chlorophenyl)maleimide instead of N-cyclohexylmaleimide and the amount of n-octylmercaptan charged was changed to 0.05 part, and the physical properties of the obtained sheet were similarly evaluated. The results are shown in Table 2.

In the present example, the sheet was prepared by kneading the vinyl chloride resin composition on a roll mill maintained at 200 °C for 8 minutes and pressing the formed sheet at 180 °C under 98 bar (100 kg/cm$^2$)for 15 minutes. The intrinsic viscosity of the copolymer (B) was 0.59 dl/g.

Comparative Example 6

The procedures of Example 1 were repeated in the same manner except that the amount of n-octylmercaptan for the copolymer (B) was changed to 0.03 part and N-cyclohexylamide was changed to N-(2-chlorophenyl)maleimide, and the physical properties of the obtained sheet were similarly evaluated. The results are shown in Table 2. The intrinsic viscosity of the copolymer (B) was 0.63 dl/g.

Comparative Example 7

The procedures of Example 7 were repeated in the same manner except that the amount of n-octylmercaptan for the copolymer (B) was changed to 0.02 part, and the physical properties of the obtained sheet were similarly evaluated. The results are shown in Table 2.

In the present comparative example, the sheet was prepared by kneading the vinyl chloride resin composition on a roll mill maintained at 200 °C for 8 minutes and pressing the formed sheet at 180 °C under 98 bar (100 kg/cm$^2$) for 15 minutes. The intrinsic viscosity of the copolymer (B) was 0.79 dl/g.

Comparative Example 8

The procedures of Example 1 were repeated in the same manner except that the amount of n-octylmercaptan for the copolymer (B) gas changed to 0.55 part, and the physical properties of the obtained sheet were similarly evaluated. The results are shown in Table 2. The intrinsic viscosity of the copolymer (B) was 0.08 dl/g.

From the results of the foregoing examples and comparative examples, it is seen that, if the intrinsic viscosity of the copolymer (B) exceeds 0.6 dl/g, even when molding is carried out under conditions capable

of effecting kneading sufficiently (by using a roll or press), sufficient mixing is difficult and the appearance of the molded article becomes poor. To perform a molding in practice, the intrinsic viscosity of the copolymer (B) must be up to 0.6 dl/g. Where the intrinsic viscosity is lower than 0.1 dl/g, the impact strength of the molded article is low and the molded article cannot be practically used.

Table 1

| | Example 1 | Example 2 | Example 3 | Example 4 | Example 5 | Example 6 | Comp. Ex. 1 | Comp. Ex. 2 | Comp. Ex. 3 | Comp. Ex. 4 | Comp. Ex. 5 | Example 7 | Example 8 | Comp. Ex. 6 | Comp. Ex. 7 | Comp. Ex. 8 |
|---|---|---|---|---|---|---|---|---|---|---|---|---|---|---|---|---|
| Vinyl chloride resin (A) (parts) | 60 | 60 | 60 | 50 | 60 | 60 | 100 | 60 | 60 | 60 | 30 | 60 | 60 | 60 | 60 | 60 |
| Copolymer (B) (parts) | 30 | 30 | 30 | 30 | 30 | 30 | 0 | 30 | 30 | 30 | 30 | 30 | 30 | 30 | 30 | 30 |
| Methyl methacrylate | 75 | 75 | 73 | 75 | 65 | 75 | | 75 | 75 | 75 | 75 | 75 | 75 | 75 | 75 | 75 |
| Styrene | 10 | 10 | | 10 | | 10 | | 10 | 10 | 10 | 10 | 10 | 10 | 10 | 10 | 10 |
| α-Methyl styrene | | | 10 | | 15 | | | | | | | | | | | |
| N-Cyclohexylmaleimide | 15 | 15 | 15 | 15 | | | | 15 | 15 | 15 | 15 | | | | | 15 |
| N-Phenylmaleimide | | | | | 20 | | | | | | | 15 | | | 15 | |
| N-(2-Chlorophenyl)maleimide | | | | | | | | | | | | | 15 | 15 | | |
| N-tert-Butylmaleimide | | | | | | 15 | | | | | | | | | | |
| Ethyl acrylate | | | 2 | | | | | | | | | | | | | |
| n-Octyl mercaptan | 0.07 | 0.07 | 0.07 | 0.07 | 0.07 | 0.1 | | 0.07 | 0.07 | 0.07 | 0.07 | 0.2 | 0.05 | 0.03 | 0.02 | 0.55 |
| Intrinsic viscosity (dl/g) | 0.48 | 0.48 | 0.47 | 0.48 | 0.5 | 0.45 | | 0.48 | 0.48 | 0.48 | 0.48 | 0.36 | 0.59 | 0.63 | 0.79 | 0.08 |

Table 1 (continued)

| | | Exam-ple 1 | Exam-ple 2 | Exam-ple 3 | Exam-ple 4 | Exam-ple 5 | Exam-ple 6 | Comp. Ex. 1 | Comp. Ex. 2 | Comp. Ex. 3 | Comp. Ex. 4 | Comp. Ex. 5 | Exam-ple 7 | Exam-ple 8 | Comp. Ex. 6 | Comp. Ex. 7 | Comp. Ex. 8 |
|---|---|---|---|---|---|---|---|---|---|---|---|---|---|---|---|---|---|
| Copolymer (C) (parts) | | 10 | 10 | 10 | 20 | 10 | 10 | 0 | 0 | 10 | 10 | 40 | 10 | 10 | 10 | 10 | 10 |
| Elastomer | Butadiene | 55 | 60 | 55 | 55 | 55 | 60 | | | 40 | 60 | 60 | 55 | 55 | 55 | 55 | 55 |
| | Styrene | 0 | 7 | 0 | 0 | 0 | 7 | | | 8 | 0 | 7 | 0 | 0 | 0 | 0 | 0 |
| Grafting monomer | Methyl methacrylate | 22 | 27 | 22 | 22 | 18 | 27 | | | 22 | 35 | 27 | 22 | 22 | 22 | 22 | 22 |
| | Styrene | 23 | 6 | 23 | 23 | 27 | 6 | | | 30 | 5 | 6 | 23 | 23 | 23 | 23 | 23 |
| Refractive index | | 1.530 | 1.521 | 1.530 | 1.530 | 1.533 | 1.521 | | | 1.540 | 1.513 | 1.521 | 1.530 | 1.530 | 1.530 | 1.530 | 1.530 |
| Dioctyltin mercaptide (parts) | | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Butyl stearate (parts) | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Montan wax (parts) | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |

Table 2

| | Example 1 | Example 2 | Example 3 | Example 4 | Example 5 | Example 6 | Comp. Ex. 1 | Comp. Ex. 2 | Comp. Ex. 3 | Comp. Ex. 4 | Comp. Ex. 5 | Example 7 | Example 8 | Comp. Ex. 6 | Comp. Ex. 7 | Comp. Ex. 8 |
|---|---|---|---|---|---|---|---|---|---|---|---|---|---|---|---|---|
| Vicat softening temperature (°C) | 99.8 | 98.2 | 101.6 | 97.8 | 105.0 | 95.2 | 74.1 | 99.8 | 97.8 | 97.5 | 88.2 | 98.2 | 100.1 | 94.8 | 92.9 | 90.2 |
| Heat Distortion temperature (°C) | 80.8 | 80.4 | 81.1 | 80.2 | 90.3 | 80.3 | 64.5 | 81.1 | 80.1 | 79.8 | 73.2 | 80.6 | 81.9 | 76.5 | 74.8 | 77.7 |
| Total luminous transmittance (%) | 88.7 | 87.3 | 88.2 | 86.8 | 85.1 | 87.5 | 86.9 | 88.9 | 81.1 | 79.8 | 82.5 | 87.0 | 87.0 | 83.0 | 79.1 | 88.1 |
| Haze value (%) | 3.2 | 3.0 | 3.4 | 4.0 | 7.2 | 3.2 | 3.9 | 3.0 | 37.1 | 20.3 | 11.0 | 3.5 | 4.0 | 55.1 | 60.5 | 3.9 |
| Color *1 | c.t. | c.t. | c.t. | c.t. | c.t. | c.t. | c.t. | c.t. | b.w. | y.o. | c.t. | c.t. | c.t. | frosted | frosted | c.t. |
| Surface state | Good | Good | Good | Good | Good | Good | Good | Good | Good | Good | Good | Good | Good | Roughened | Roughened | Good |
| Izod impact strength ($kg\cdot cm/cm^2$) | 9.8 | 10.1 | 10.3 | 11.1 | 10.5 | 12.3 | 3.4 | 1.9 | 8.9 | 9.1 | 15.2 | 11.2 | 12.4 | 3.5 | 4.3 | 5.1 |
| Dynstat impact strength ($kg\cdot cm/cm^2$) | 30.0 | 31.0 | 31.4 | 32.2 | 31.4 | 35.7 | 10.5 | 3.0 | 25.1 | 26.5 | 39.5 | 33.1 | 35.5 | 11.3 | 12.9 | 15.4 |
| Molding method | Extrusion | Extrusion | Extrusion | Extrusion | Extrusion | Extrusion | Extrusion | Extrusion | Extrusion | Extrusion | Extrusion | Extrusion | Roll pressing | Extrusion | Roll pressing | Extrusion |

* c.t.: colorless transparent
b.w.: bluish white
y.o.: yellowish opaque

## Example 9

A bottle having an inner volume of 1,000 cc was made from the vinyl chloride resin composition of Example 1 by the blow-forming using a blow-forming machine (Model TS-50 supplied by Tahara Shoei

Kiko) having a screw L/D ratio of 24 and a screw compression ratio of 2.0 and at a die temperature of 180 °C. The performances of the obtained bottle were evaluated by the following methods.

(1) Heat Distortion Resistance

Warm water was filled in the formed bottle, and the heat distortion resistance was expressed by the temperature of warm water which caused a 1% reduction in the volume of the bottle.

(2) Falling Strength

Water maintained at 0 °C was filled in the bottle, and the cumulative mean failure height was determined according to ASTM D-2463.

(3) Transparency

The transparency was evaluated by the naked eye observation.

The results are shown in Table 3.

Comparative Example 9

In the same manner as described in Example 9, a bottle was formed from the composition of Comparative Example 1 and the performances of the formed bottle were evaluated. The results are shown in Table 3.

Example 10

In the same manner as described in Example 9, a bottle was formed from the composition of Example 7 and the performances of the formed bottle were evaluated. The results are shown in Table 3.

Comparative Example 10

In the same manner as described in Example 9, a bottle was formed from the composition of Comparative Example 2 and the performances of the formed bottle were evaluated. The results are shown in Table 3.

Comparative Example 11

In the same manner as described in Example 9, a bottle was formed from the composition of Comparative Example 7 and the performances of the formed bottle were evaluated. The results are shown in Table 3.

From the results shown in Table 3, it is seen that when the vinyl chloride resin composition of the present invention is used, a bottle having an excellent heat distortion resistance, falling strength, and transparency can be obtained.

Table 3

| | Example 9 | Example 10 | Comparative Example 9 | Comparative Example 10 | Comparative Example 11 |
|---|---|---|---|---|---|
| Heat distortion resistance (filling temperature, °C) | 86.5 | 87.3 | 65.3 | 87.1 | 68.5 |
| Falling strength (cm) | 132 | 130 | 81 | 46 | 55 |
| Transparency (naked eye observation) | Good | Good | Good | Good | Frosted |

## Claims

**1.** A vinyl chloride resin composition comprising (A) 40 to 90 parts by weight of polyvinyl chloride or a vinyl chloride copolymer comprising at least 80% by weight of units derived from vinyl chloride, (B) 5 to 50 parts by weight of a copolymer comprising 90 to 50 % by weight of units derived from methyl methacrylate, 5 to 25% by weight of units derived from an N-substituted maleimide and 5 to 25 % by weight of units derived from an aromatic vinyl compound, wherein the ratio $\beta/\alpha$ of the mole number $\beta$ of the aromatic vinyl compound to the mole number $\alpha$ of the N-substituted maleimide is from 0.2 to 5

and wherein the copolymer (B) has an intrinsic viscosity of 0.1 to 0.6 dl/g as measured at 25 ° C in chloroform, and (C) 5 to 30 parts by weight of a copolymer obtained by graft-polymerizing 70 to 20 % by weight of at least one monomer selected from the group consisting of alkyl esters of acrylic acid, alkyl esters of methacrylic acid, aromatic vinyl compounds and vinyl cyanide compounds in the presence of 30 to 80 % by weight of an elastomer containing at least 50% by weight of a conjugated diene component, said copolymer (C) having a refractive index of 1.515 to 1.535 as measured at 23 ° C with sodium D rays, with the proviso that the total amounts of components (A), (B) and (C) is 100 parts by weight.

2. The vinyl chloride resin composition as set forth in claim 1, wherein the N-substituted maleimide is represented by the following formula:

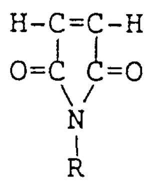

(I)

wherein R represents a hydrogen atom, an alkyl group having 1 to 15 carbon atoms, a cycloalkyl group having 5 to 8 carbon atoms, or an aryl or substituted aryl group having 6 to 20 carbon atoms.

3. The vinyl chloride resin composition as set forth in claim 2, wherein R represents an alkyl group having 1 to 4 carbon atoms.

4. The vinyl chloride resin composition as set forth in claim 2, wherein R represents a phenyl group or a chlorophenyl group.

5. The vinyl chloride resin composition as set forth in claim 2, wherein R represents a cyclohexyl group.

6. The vinyl chloride resin composition as set forth in claim 1, wherein the aromatic vinyl compound is selected from the group consisting of styrene, vinyltoluene and α-methylstyrene.

7. The vinyl chloride resin composition as set forth in claim 1, wherein the copolymer (C) is obtained by graft-polymerizing at least one monomer selected from the group consisting of an alkyl acrylate having 1 to 8 carbon atoms in the alkyl group, an alkyl methacrylate having 1 to 4 carbon atoms in the alkyl group, styrene, α-methylstyrene, α-methylvinyl toluene, acrylonitrile and methacrylonitrile, in the presence of a polybutadiene elastomer or a butadiene copolymer elastomer containing at least 50% by weight of butadiene units.

8. The vinyl chloride resin composition as set forth in claim 1, wherein the refractive index of the copolymer (C) is 1.520 to 1.530.

9. The vinyl chloride resin composition as set forth in claim 1, wherein the polyvinyl chloride and vinyl chloride copolymer have a degree of polymerization of 600 to 1,100.

10. The vinyl chloride resin composition as set forth in claim 1, wherein a shaped article made therefrom has a heat distortion temperature of at least 80 ° C as measured according to ASTM D-648.

**Patentansprüche**

1. Vinylchloridharzzusammensetzung, umfassend (A) 40 bis 90 Gew.-Teile Polyvinylchlorid oder eines Vinylchloridcopolymeren, welches mindestens 80 Gew.-% von Vinylchlorid abgeleitete Einheiten umfaßt, (B) 5 bis 50 Gew.-Teile eines Copolymeren, welches 90 bis 50 Gew.-% von Methylmethacrylat abgeleitete Einheiten, 5 bis 25 Gew.-% von einem N-substituierten Maleimid abgeleitete Einheiten und 5 bis 25 Gew.-% von einer aromatischen Vinylverbindung abgeleitete Einheiten umfaßt, wobei das

Verhältnis $\beta/\alpha$ der Molanzahl $\beta$ der aromatischen Vinylverbindung zu der Molanzahl $\alpha$ des N-substituierten Maleimids 0,2 bis 5 beträgt und wobei das Copolymer (B) eine bei 25°C in Chloroform gemessene Grenzviskosität von 0.1 bis 0,6 dl/g besitzt, und (C) 5 bis 30 Gew.-Teile eines Copolymeren, welches durch Pfropfpolymerisieren von 70 bis 20 Gew.-% mindestens eines Monomeren, welches aus der aus Alkylestern der Acrylsäure, Alkylestern der Methacrylsäure, aromatischen Vinylverbindungen und Vinylcyanidverbindungen bestehenden Gruppe gewählt ist, in Gegenwart von 30 bis 80 Gew.-% eines mindestens 50 Gew -% einer konjugierten Dienkomponente enthaltenden Elastomeren hergestellt worden ist, wobei das Copolymer (C) einen bei 23°C mit Natrium-D-Strahlen gemessenen Brechungsindex von 1,515 bis 1,535 besitzt, mit der Maßgabe, daß die Gesamtmenge der Komponenten (A), (B) und (C) 100 Gew.-Teile beträgt.

**2.** Vinylchloridharzzusammensetzung nach Anspruch 1, wobei das N-substituierte Maleimid der folgenden Formel entspricht:

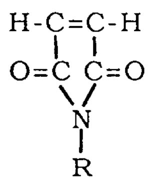

(I)

worin Rein Wasserstoffatom, eine Alkylgruppe mit 1 bis 15 Kohlenstoffatomen, Cycloalkylgruppe mit 5 bis 8 Kohlenstoffatmen oder eine Aryl- oder substituierte Arylgruppe mit 6 bis 20 Kohlenstoffatomen bedeutet.

**3.** Vinylchloridharzzusammensetzung nach Anspruch 2, wobei R eine Alkylgruppe mit 1 bis 4 Kohlenstoffatomen bedeutet.

**4.** Vinylchloridharzzusammensetzung nach Anspruch 2, wobei Reine Phenylgruppe oder eine Chlorphenylgruppe bedeuetet.

**5.** Vinylchloridharzzusammensetzung nach Anspruch 2, wobei R eine Cyclohexylgruppe bedeutet.

**6.** Vinylchloridharzzusammensetzung nach Anspruch 1, wobei die aromatische Vinylverbindung aus der aus Styrol, Vinyltoluol und $\alpha$-Methylstyrol bestehenden Gruppe gewählt ist.

**7.** Vinylchloridharzzusammensetzung nach Anspruch 1, wobei das Copolymer (C) durch Pfropfpolymerisieren mindestens eines Monomeren, welches aus der aus einem Alkylacrylat mit 1 bis 8 Kohlenstoffatomen in der Alkylgruppe, einem Alkylmethacrylat mit 1 bis 4 Kohlenstoffatomen in der Alkylgruppe, Styrol, $\alpha$-Methylstyrol, $\alpha$-Methylvinyltoluol, Acrylnitril und Methacrylnitril bestehenden Gruppe gewählt ist, in Gegenwart eines mindestens 50 Gew.-% Butadieneinheiten enthaltenden Polybutadienelastomeren oder Butadiencopolymerelastomeren hergestellt worden ist.

**8.** Vinylchloridharzzusammensetzung nach Anspruch 1, wobei der Brechungsindex des Copolymeren (C) 1,520 bis 1,530 beträgt.

**9.** Vinylchloridharzzusammensetzung nach Anspruch 1, wobei das Polyvinylchlorid und das Vinylchloridcopolymer einen Polymerisationsgrad von 600 bis 1100 besitzen.

**10.** Vinylchloridharzzusammensetzung nach Anspruch 1, wobei ein daraus hergestellter, geformter Gegenstand eine gemäß ASTM D-648 gemessene Formbeständigkeitstemperatur von mindestens 80°C aufweist.

## Revendications

1. Composition de résine à base de chlorure de vinyle comprenant (A) 40 à 90 parties en poids de chlorure de polyvinyle ou d'un copolymère de chlorure de vinyle comprenant au moins 80 % en poids d'unités dérivées du chlorure de vinyle, (B) 5 à 50 parties en poids d'un copolymère comprenant 90 à 50 % en poids d'unités dérivées d'un méthacrylate de méthyle, 5 à 25 % en poids d'unités dérivées d'un maléimide N-substitué et 5 à 25 % en poids d'unités dérivées d'un composé vinylique aromatique, dans lequel le rapport $\beta/\alpha$ du nombre de moles $\beta$ du composé vinylique aromatique sur le nombre de moles a du maléimide N-substitué est compris entre 0,2 et 5 et dans lequel le copolymère (B) a une viscosité intrinsèque de 0,1 à 0,6 dl/g mesurée à 25°C dans du chloroforme, et (C) 5 à 30 parties en poids d'un copolymère obtenu par polymérisation par greffe de 70 à 20 % en poids d'au moins un monomère choisi dans le groupe constitué par des alkylesters d'acide acrylique, alkylesters d'acide méthacrylique, composés vinyliques aromatiques et composés de cyanure de vinyle en présence de 30 à 80 % en poids d'un élastomère contenant au moins 50 % en poids d'un composant diène conjugué, ledit copolymère (C) ayant un indice de réfraction compris entre 1,515 et 1,535 mesuré à 23°C avec des raies D du sodium, avec la condition que les quantités totales de composants (A), (B) et (C) soient de 100 parties en poids.

2. Composition de résine à base de chlorure de vinyle comme présenté dans la revendication 1, dans laquelle le maléimide N-substitué est représenté par la formule suivante :

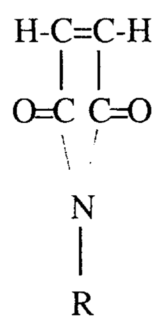

dans laquelle R représente un atome d'hydrogène, un groupe alkyle ayant 1 à 15 atomes de carbone, un groupe cycloalkyle ayant 5 à 8 atomes de carbone, ou un groupe aryle ou aryle substitué ayant 6 à 20 atomes de carbone.

3. Composition de résine à base de chlorure de vinyle comme présenté dans la revendication 2, dans laquelle R représente un groupe alkyle ayant 1 à 4 atomes de carbone.

4. Composition de résine à base de chlorure de vinyle comme présenté dans la revendication 2, dans laquelle R représente un groupe phényle ou un groupe chlorophényle.

5. Composition de résine à base de chlorure de vinyle comme présenté dans la revendication 2, dans laquelle R représente un groupe cyclohexyle.

6. Composition de résine à base de chlorure de vinyle comme présenté dans la revendication 1, dans laquelle le composé vinylique aromatique est choisi dans le groupe constitué de styrène, vinyltoluène et $\alpha$-méthylstyrène.

7. Composition de résine à base de chlorure de vinyle comme présenté dans la revendication 1, dans laquelle le copolymère (C) est obtenu par polymérisation par greffe d'au moins un monomère choisi dans le groupe constitué d'un acrylate d'alkyle ayant 1 à 8 atomes de carbone dans le groupe alkyle, d'un méthacrylate d'alkyle ayant 1 à 4 atomes de carbone dans le groupe alkyle, d'un styrène, d'un $\alpha$-méthylstyrène, d'un $\alpha$-méthylvinyltoluène, d'un acrylonitrile et d'un méthacrylonitrile, en présence d'un élastomère de polybutadiène ou d'un élastomère de copolymère de butadiène contenant au moins 50 % en poids d'unités butadiène.

8. Composition de résine à base de chlorure de vinyle comme présenté dans la revendication 1, dans laquelle l'indice de réfraction du copolymère (C) est compris entre 1,520 et 1,530.

9. Composition de résine à base de chlorure de vinyle comme présenté dans la revendication 1, dans laquelle le chlorure de polyvinyle et le copolymère de chlorure de vinyle ont un degré de polymérisation de 600 à 1100.

10. Composition de résine à base de chlorure de vinyle comme présenté dans la revendication 1, pour laquelle un article façonné fabriqué à partir de celle-ci a une température de distorsion à la chaleur d'au moins 80 °C lorsqu'elle est mesurée selon ASTM D-648.